# EUROPEAN PATENT APPLICATION

(11) **EP 3 815 538 A1**
(43) Date of publication of application: **05.05.2021**
(21) Application number: 19839931.3
(22) Date of filing: 19.07.2019
(51) Int. Cl.: A23L 2/38, A23C 9/00

(54) **BEVERAGE CONTAINING VINEGAR AND DAIRY**

(30) Priority: 27.07.2018 JP 2018141100
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: MURAMOTO, Nami, Handa-shi, Aichi 475-8585 (JP)
(74) Representative: Mewburn Ellis LLP
(86) International application number: PCT/JP2019/028545
(87) International publication number: WO 2020/022229

(57) **Abstract**

The present invention provides a dairy-containing vinegar beverage: with which dairy specific off-taste and off-odor are reduced; the irritation of the throat and "choking" are suppressed; which has a mild sour taste; and/or in which milk protein is likely not to aggregate/precipitate even under a low pH, the appearance, tongue feel and down-the-throat feel are not compromised even during long-term storage, and which has a well-balanced flavor. This dairy-containing vinegar beverage contains vinegar and diary, and satisfies conditions (A) and (B). (A) The lactic acid content per 100 mL of the beverage is 1 - 500 mg. (B) The content mass ratio of free methionine to the total methionine is 0.34 or greater.

## Description

### TECHNICAL FIELD

The present invention relates to a beverage containing vinegar and dairy (hereinafter also referred to as "dairy-containing vinegar beverage") with reduced off-taste and off-odor specific to dairy, reduced tingling irritation at the throat or "choking," mellowed sourness, and excellent flavor balance.

### BACKGROUND ART

As consumers have become increasingly concerned about their health in recent years, various functional foods such as foods for specified health use and foods with nutrient function claims have been incorporated into daily diets. Among them, vinegar has been attracting a lot of attention because of its various health benefits, such as lowering blood pressure, reducing visceral fat, and suppressing postprandial blood sugar elevation. Under the circumstances, vinegar beverages are considered as a desirable product form that meets the health-consciousness of consumers, since they allow easy intake of vinegar without the need for messy cooking or utensils such as spoons. However, vinegar has a strong sour taste and pungent odor, which can easily cause tingling irritation at the throat or choking, making it difficult to drink it smoothly. In view of these issues, attempts have been made to provide vinegar beverages that are easier to drink by adding fruit juice such as apple or grape, flavors, or sugars to vinegar. It is also important to diversify the flavors (tastes and aromas) of vinegar beverages to meet consumer preferences. Among these, vinegar beverages containing dairy such as milk or fermented milk (dairy-containing vinegar beverages) are expected to meet the health consciousness and diversified tastes of consumers, as dairy is considered to have high nutritional value.

However, quite a few consumers do not like dairy due to its specific off-taste and off-odor. In addition, milk proteins contained in dairy coagulate under low pH, resulting in particulate coagula that float and precipitate in liquid. This phenomenon is more pronounced after long-term storage. Such particulate coagula floating and precipitating in liquid impair not only the appearance of the beverage but also the texture and feel of the beverage when ingested. In order to prevent such coagulation and/or precipitation of milk proteins under low pH, attempts have been made to add dispersion stabilizers or coagulation/precipitation inhibitors to vinegar beverages.

For example, WO2016/056366A (Patent Literature 1) discloses a dairy-containing vinegar beverage containing a protein dispersion stabilizer such as soy polysaccharides, HM pectin, and fibrous insoluble cellulose. JP-HI 1-243854A (Patent Literature 2) discloses a dairy-containing vinegar beverage containing pectin hydrate as an agent to prevent coagulation and precipitation of milk proteins.

However, such addition of a dispersion agent or anti-coagulation/precipitation agent requires pre-treatment such as dissolving or hydrating the agent in liquid, which complicates the manufacturing process. These methods also impair the original flavor of the beverage and spoil the palatability thereof, and are not effective in inhibiting the coagulation and precipitation of proteins after long-term storage. Furthermore, these methods cannot control the off-taste or off-odor specific to dairy or the tingling irritation at the throat or "choking" caused by vinegar, placing a hindrance to providing a beverage with mellowed sourness and good flavor balance.

### LIST OF CITATIONS

### Patent Literature

[Patent Literature 1] WO2016/056366A
[Patent Literature 2] JP-H11-243854A

### SUMMARY OF INVENTION

### PROBLEM TO BE SOLVED BY THE INVENTION

Thus, problems to be addressed by the present invention include providing a beverage containing vinegar and dairy which satisfies at least one, preferably two or more, of requirements (1) to (3) below, and also has excellent flavor balance.
(1) The beverage exhibits reduced off-taste and/or off-odor originating from dairy.
(2) The beverage causes reduced tingling irritation at the throat or "choking," and exhibits mellowed sourness.
(3) The beverage causes less coagulation and precipitation of milk proteins contained therein even under low pH, and maintains its appearance, texture, and throat feel even after long-term storage.

### MEANS TO SOLVE THE PROBLEM

Through diligent efforts to solve the problems, the present inventors have conceived of modifying a beverage containing vinegar and dairy (dairy-containing vinegar beverage) by adjusting the lactic acid content in the beverage and the mass ratio of the free methionine content to the total methionine content in the beverage as appropriate, and have found that the resulting beverage satisfies at least one, preferably two or more, of the requirements (1) to (3) stated above, and also exhibits excellent flavor balance, thereby achieving the present invention.

Specifically, aspects of the present invention include:
[1] A beverage comprising vinegar and dairy and having: (A) a lactic acid content of within a range of from 1 mg to 500 mg per 100 mL of the beverage; and (B) a mass ratio of a free methionine content to a total methionine content of 0.34 or higher.
[2] The beverage as defined in Aspect [1], wherein the lactic acid content is 1.5 mg or higher per 100 mL of the beverage.
[3] The beverage as defined in Aspect [2], wherein the lactic acid content is 2.0 mg or higher per 100 mL of the beverage.
[4] The beverage as defined in any one of Aspects [1] to [3], wherein the lactic acid content is 480 mg or lower per 100 mL of the beverage.
[5] The beverage as defined in Aspect [4], wherein the lactic acid content is 450 mg or lower per 100 mL of the beverage.
[6] The beverage as defined in Aspect [5], wherein the lactic acid content is 420 mg or lower per 100 mL of the beverage.
[7] The beverage as defined in Aspect [6], wherein the lactic acid content is 380 mg or lower per 100 mL of the beverage.
[8] The beverage as defined in Aspect [7], wherein the lactic acid content is 350 mg or lower per 100 mL of the beverage.
[9] The beverage as defined in Aspect [8], wherein the lactic acid content is 300 mg or lower per 100 mL of the beverage.
[10] The beverage as defined in any one of Aspects [1] to [9], wherein the mass ratio of the free methionine content to the total methionine content is 0.38 or higher.
[11] The beverage as defined in Aspect [10], wherein the mass ratio of the free methionine content to the total methionine content is 0.42 or higher.
[12] The beverage as defined in Aspect [11], wherein the mass ratio of the free methionine content to the total methionine content is 0.46 or higher.
[13] The beverage as defined in Aspect [12], wherein the mass ratio of the free methionine content to the total methionine content is 0.50 or higher.
[14] The beverage as defined in any one of Aspects [1] to [13], further having: (C) a ratio of a lactic acid content to an acetic acid content of within a range of from 0.005 to 4.00.
[15] The beverage as defined in Aspect [14], wherein the mass ratio of the lactic acid content to the acetic acid content is 0.007 or higher.
[16] The beverage as defined in Aspect [15], wherein the mass ratio of the lactic acid content to the acetic acid content is 0.008 or higher.
[17] The beverage as defined in Aspect [16], wherein the mass ratio of the lactic acid content to the acetic acid content is 0.01 or higher.
[18] The beverage as defined in Aspect [17], wherein the mass ratio of the lactic acid content to the acetic acid content is 0.02 or higher.
[19] The beverage as defined in any one of Aspects [14] to [18], wherein the mass ratio of the lactic acid content to the acetic acid content is 3.70 or lower.
[20] The beverage as defined in Aspect [19], wherein the mass ratio of the lactic acid content to the acetic acid content is 3.50 or lower.
[21] The beverage as defined in Aspect [20], wherein the mass ratio of the lactic acid content to the acetic acid content is 3.30 or lower.
[22] The beverage as defined in any one of Aspects [1] to [21], further having: (D) an acetic acid content of 30 mg or higher per 100 mL of the beverage.
[23] The beverage as defined in Aspect [22], wherein the acetic acid content per 100 mL of the beverage is 50 mg or higher.
[24] The beverage as defined in Aspect [23], wherein the acetic acid content per 100 mL of the beverage is 70 mg or higher.
[25] The beverage as defined in Aspect [24], wherein the acetic acid content per 100 mL of the beverage is 100 mg or higher.
[26] The beverage as defined in any one of Aspects [1] to [25], wherein the acetic acid content per 100 mL of the beverage is 2200 mg or lower.
[27] The beverage as defined in Aspect [26], wherein the acetic acid content per 100 mL of the beverage is 2000 mg or lower.
[28] The beverage as defined in Aspect [27], wherein the acetic acid content per 100 mL of the beverage is 1800 mg or lower.
[29] The beverage as defined in Aspect [28], wherein the acetic acid content per 100 mL of the beverage is 1600 mg or lower.
[30] The beverage as defined in any one of Aspects [1] to [29], further having: (E) a dairy-derived sugar content of 3000 mg or lower per 100 mL of the beverage.
[31] The beverage as defined in Aspect [30], wherein the dairy-derived sugar content per 100 mL of the beverage is 2500 mg or lower.
[32] The beverage as defined in Aspect [31], wherein the dairy-derived sugar content per 100 mL of the beverage is 2000 mg or lower.
[33] The beverage as defined in Aspect [32], wherein the dairy-derived sugar content per 100 mL of the beverage is 1500 mg or lower.
[34] The beverage as defined in Aspect [33], wherein the dairy-derived sugar content per 100 mL of the beverage is 1000 mg or lower.
[35] The beverage as defined in Aspect [34], wherein the dairy-derived sugar content per 100 mL of the beverage is 700 mg or lower.
[36] The beverage as defined in any one of Aspects [1] to [35], further having: (F) a pH of within a range of from 2.0 to 4.
[37] The beverage as defined in Aspect [36], wherein the pH is 2.2 or higher.
[38] The beverage as defined in Aspect [37], wherein the pH is 2.4 or higher.
[39] The beverage as defined in any one of Aspects [36] to [38], wherein the pH is 4.5 or lower.
[40] The beverage as defined in Aspect [39], wherein the pH is 4.4 or lower.
[41] A condensed beverage comprising vinegar and dairy and having a composition adjusted so as to yield a beverage as defined in any one of Aspects [1] to [40] via dilution by a predetermined dilution factor.
[42] A method for producing a beverage containing vinegar and dairy, comprising: mixing dairy and vinegar optionally with one or more other components so as to yield a mixture having: (A) a lactic acid content of within a range of from 1 mg to 500 mg per 100 mL of the beverage; and (B) a mass ratio of a free methionine content to a total methionine content of 0.34 or higher.
[43] A method for improving a flavor of a beverage containing vinegar and dairy, comprising: mixing dairy and vinegar optionally with one or more other components so as to yield a mixture having: (A) a lactic acid content of within a range of from 1 mg to 500 mg per 100 mL of the beverage; and (B) a mass ratio of a free methionine content to a total methionine content of 0.34 or higher.
[44] A method for improving a beverage containing vinegar and dairy in at least one of: off-taste and/or off-odor specific to dairy, irritation at the throat and/or choking, and precipitation and/or coagulation of milk proteins at a low pH, comprising: mixing dairy and vinegar optionally with one or more other components so as to yield a mixture having: (A) a lactic acid content of within a range of from 1 mg to 500 mg per 100 mL of the beverage; and (B) a mass ratio of a free methionine content to a total methionine content of 0.34 or higher.

### ADVANTAGEOUS EFFECTS OF INVENTION

The present invention may provide a beverage containing vinegar and dairy which satisfies at least one, preferably two or more, of requirements (1) to (3) below, and also has excellent flavor balance.
(1) The beverage exhibits reduced off-taste and/or off-odor originating from dairy.
(2) The beverage causes reduced tingling irritation at the throat or "choking," and exhibits mellowed sourness.
(3) The beverage causes less coagulation and precipitation of milk proteins contained therein even under low pH, and maintains its appearance, texture, and throat feel even during long-term storage.

### DESCRIPTION OF EMBODIMENTS

The present invention will now be described based on specific embodiments. These embodiments should not be construed to limit the scope of the invention. All references, including patent publications, unexamined patent publications, and non-patent publications cited in this specification, can be incorporated by reference in their entirety for all purposes.

### <Dairy-containing vinegar beverage>

A first embodiment of the present invention provides a beverage containing vinegar and dairy (dairy-containing vinegar beverage) having a lactic acid content and a mass ratio of a free methionine content to a total methionine content each within a predetermined range (hereinafter also referred to as "the beverage of the present invention").

Through diligent efforts to solve the problems stated above, the present inventors have conceived of modifying a beverage containing vinegar and dairy (dairy-containing vinegar beverage) by adjusting the lactic acid content in the beverage and the mass ratio of the free methionine content to the total methionine content in the beverage to within their respective ranges, and have found that the resulting beverage satisfies at least one, preferably two or more, of the requirements (1) to (3) stated above, and also exhibits excellent flavor balance. The beverage of the present invention is based on such findings.
(1) The beverage exhibits reduced off-taste and/or off-odor originating from dairy.
(2) The beverage causes reduced tingling irritation at the throat or "choking," and exhibits mellowed sourness.
(3) The beverage causes less coagulation and precipitation of milk proteins contained therein even under low pH, and maintains its appearance, texture, and throat feel even after long-term storage.

The "dairy-containing vinegar beverage" herein refers to a beverage containing vinegar and dairy. Beverages encompassed by the present invention include: a straight-type beverage, which as such satisfies the requirements according to the present invention without dilution; and a condensed-type beverage, which can be diluted by a predetermined dilution factor with water or other flowable solvent to produce a beverage that satisfies the requirements according to the present invention. Unless otherwise stated, these two types of beverages are distinguished herein by referring to the former, straight-type beverage as "the beverage of the present invention," and referring to the latter, condensed-type beverage as "the condensed beverage of the present invention."

### <Milk >

The beverage of the present invention contains dairy. Examples of the "dairy" herein include: milk and dairy products, fermentation products of milk or dairy products with microorganisms such as yeasts or bacteria, and hydrolysis products of milk or dairy products with enzymes, hydrochloric acid, or hot water, any of which can be used as the dairy in the present invention. Examples of milk include: milk of mammalian origins such as cow milk, buffalo milk, yak milk, goat milk, sheep milk, horse milk, camel milk, and human milk. Examples of dairy products include processed products made from animal milk, especially cow milk, or from any component(s) thereof. Examples of liquid dairy products include: market milk, milk beverages, non-fermented cream, condensed milk, skimmed milk, whey, buttermilk, special liquid milk, fermented cream, fermented milk, yogurt, and various types of sour milk. Examples of non-liquid dairy products include: butter, milk powder, ice cream, skimmed milk powder, modified milk powder, casein, lactose, cream powder, whey powder, whey minerals, milk protein concentrates, and cheese. These dairies may be used either singly or in any combination of two or more. The content ratio of the dairy to the beverage of the present invention is not limited. However, in order to suppress off-taste and off-odor specific to dairy when ingested, and also to suppress coagulation and precipitation of milk proteins during long-term storage, the content of dairy in the beverage may preferably be 50 mass% or lower, particularly 40 mass% or lower, more particularly 25 mass% or lower.

### <Sugar derived from dairy >

The beverage of the present invention contains sugars derived from the dairy, or dairy-derived sugars. Examples of the "dairy-derived sugars" herein include: monosaccharides such as galactose, glucose, mannose, ribose, and fucose; and disaccharides such as lactose, which is composed of one molecule of galactose and one molecule of glucose. Typical dairy-derived sugars among them include galactose and lactose. Monosaccharide molecules such as galactose and glucose, as well as monosaccharide entities composing disaccharide molecules such as lactose, each have D-, L-, and DL-forms, any of which forms may be used. These dairy-derived sugars may be contained in the beverage of the present invention singly or in any combination of two or more. The content of dairy-derived sugars in the beverage of the present invention is not limited. However, in order to suppress the off-taste and off-odor specific to dairy when ingested, and also to suppress coagulation and precipitation of milk proteins during long-term storage, the content of dairy-derived sugars per 100 mL of the beverage may preferably be 3000 mg or lower, particularly 2500 mg or lower, more particularly 2000 mg or lower, or 1500 mg or lower, or 1000 mg or lower, especially 700 mg or lower. Since galactose and lactose are representative dairy-derived sugars as described above, the content of galactose and lactose in the beverage may be measured and used as an indicator of the content of dairy-derived sugars in the beverage. In this case, the total content of galactose and lactose in the beverage may preferably be within the range mentioned above. The content of dairy-derived sugars (e.g., galactose and lactose) can be measured using, e.g., high-performance liquid chromatography.

### <Vinegar>

The beverage of the present invention contains vinegar. Examples of the "vinegar" herein include: brewed vinegars, which are produced from grains such as rice or wheat, or from fruit juice; and synthetic vinegars, which are produced from a diluted solution of glacial acetic acid or acetic acid by adding sugar or other seasonings thereto, or adding brewed vinegar thereto, any of which may be used in the present invention. Examples of brewed vinegars include: rice vinegar, grain vinegar (such as brown rice vinegar, black vinegar, sake lees vinegar, malt vinegar, wheat vinegar, and soy vinegar), fruit vinegar (such as apple vinegar, grape vinegar, lemon vinegar, kabosu (Citrus sphaerocarpa) vinegar, plum vinegar, wine vinegar, and balsamic vinegar), refined vinegar (which is produced via acetic acid fermentation using ethanol as a raw material), Chinese vinegar, and sherry vinegar. Examples of synthetic vinegars include: glacial acetic acid or acetic acid diluted with water as appropriate. These vinegars may be used either singly or in any combination of two or more. The content of vinegar in the beverage is not limited, but can be adjusted as appropriate in accordance with the mass ratio of the lactic acid content to the acetic acid content, the acetic acid content, and the pH value, which will be described below.

### <Lactic acid and its content>

The beverage of the present invention contains lactic acid. Examples of the "lactic acid" herein include lactic acid molecules and lactate salts such as potassium lactate, calcium lactate, and sodium lactate. In this regard, lactic acid may be added externally to the beverage of the present invention so as to adjust the total lactic acid content to within a predetermined range. Alternatively, the dairy and the vinegar are mixed, optionally with other raw materials, such as to adjust the total content of the lactic acid derived from these materials to within a predetermined range.

In order to suppress the off-taste and off-odor specific to dairy and the tingling irritation at the throat or "choking" when ingested, and also to make the sourness milder, the lactic acid content per 100 mL of the beverage of the present invention when ingested may preferably be adjusted to within a predetermined range. Specifically, the lactic acid content per 100 mL of the beverage when ingested may typically be 1.0 mg or higher, preferably 1.5 mg or higher, particularly 2.0 mg or higher, and may typically be 500 mg or lower, preferably 480 mg or lower, particularly 450 mg or lower, more particularly 420 mg or lower, even more particularly 38 0 mg or lower, particularly 350 mg or lower, most preferably 300 mg or lower. If the lactic acid content per 100 mL of the beverage falls short of the range stated above, the off-taste and off-odor specific to dairy and the tingling irritation at the throat or "choking" may not be controlled, whereby the sourness may not be mellowed and the overall flavor balance may be lost. On the other hand, if the lactic acid content exceeds the range mentioned above, the sourness with astringency specific to lactic acid may become more prominent, whereby the sourness may not be mellowed and the overall flavor balance may be lost. The lactic acid content can be measured using, e.g., high-performance liquid chromatography.

### <Mass ratio of free methionine to total methionine>

The beverage of the present invention contains methionine. The "methionine" herein encompasses L-, D-, and DL-forms, any of which forms may be contained in the beverage. Methionine is a hydrophobic amino acid that contains sulfur in its side chain. Free amino acids refer to amino acids existing in their free forms in food or beverage, which are distinguished from amino acids existing as constituents of proteins in food or beverage. Accordingly, the term "free methionine" herein refers to methionine existing in its "free" form in the beverage. On the other hand, the "total methionine" herein refers to all the methionine existing in the beverage, which corresponds to the sum of the free methionine content and the content of methionine existing as constituents of proteins in the beverage.

From the viewpoint of suppressing the off-taste and off-odor specific to dairy, mellowing the sourness, and adjusting the flavor balance when ingested, the mass ratio of the free methionine content to the total methionine content in the beverage of the present invention may preferably be within a predetermined range. Specifically, the mass ratio of the free methionine content to the total methionine content in the beverage may typically be 0.34 or higher, preferably 0.38 or higher, particularly 0.42 or higher, more particularly 0.46 or higher, especially 0.50 or higher. If the mass ratio of the free methionine content to the total methionine content in the beverage falls short of the range mentioned above, the off-taste and off-odor specific to dairy and the tingling irritation at the throat or "choking" may not be controlled as appropriate, whereby the sourness may not be mellowed and the overall flavor balance may be lost. The methionine contained in the beverage may be derived from milk, vinegar, or any other components contained in the beverage, or may be added externally as a pure substance, or may be a mixture of both, as long as the free methionine content and the total methionine content in the final beverage should meet the range stated above.

In general, it is believed that an acidic substance, such as lactic acid or acetic acid, exhibits its sour taste via dissociation to release protons, which bind to taste receptors and thereby cause sourness stimuli. Although the mechanism underlying the present invention is not clear, our presumption is that the ratio of the content of total methionine, which includes methionine existing as constituents of proteins and peptides, to the content of free methionine, which exists in its free form, has some effect on the dissociation state of the acidic substance as stated above, and that a change in the amount of dissociated protons affects the perception of the sourness and the off-taste and off-odor specific to dairy upon drinking.

If the mass ratio of the free methionine content to the total methionine content in the beverage falls short of the above-mentioned range, the coagulation and precipitation of milk proteins may not be sufficiently suppressed during long-term storage, whereby the appearance of the beverage and the feel of the beverage on the tongue and down the throat may be worsened. Although the reason therefor is not clear, our presumption is that the mass ratio of the free methionine content to the total methionine content has some effect on the surface potentials of various components in the beverage, thereby changing the tendency of milk proteins to coagulate and precipitate.

The "mass ratio of the free methionine content to the total methionine content" herein refers to the value obtained by dividing the free methionine content in the beverage by the total methionine content in the beverage. The total methionine content herein refers to the sum of the free methionine content and the content of methionine existing as constituents of proteins, etc., as described above. Therefore, in order to measure the total methionine content according to amino acid analysis, it is necessary to break down the proteins in a sample via hydrolysis into its constituent amino acids prior to the amino acid analysis. The free methionine content, on the other hand, accounts for the content of methionine existing in its free form in a sample, so there is no need to hydrolyze it before subjecting it to amino acid analysis. The hydrolysis herein can be carried out by adding 2 mL of concentrated hydrochloric acid to 2 mL of the sample solution, and heating the mixture at 110°C for 20 to 24 hours. The free methionine and total methionine contents can be measured using an automated amino acid analyzer. When measuring the free methionine and total methionine contents according to amino acid analysis, the only difference in the operations or measurement is whether or not to carry our hydrolysis prior to the amino acid analysis, while the operations thereafter are the same for the measurement of the free methionine and total methionine contents.

### <Mass ratio of the lactic acid content to the acetic acid content>

The beverage of the present invention contains acetic acid, which may typically be derived mainly from the vinegar explained above, but may also be derived from any other component. The acetic acid herein encompasses acetic acid molecules (CH₃ COOH) and acetate ions (CH₃ COO⁻) originating from any raw materials or additives. The acetic acid content herein refers to the sum of the content of acetic acid molecules and the content of acetate ions. The acetic acid may preferably be derived from the vinegar. In general, organic acids such as acetic acid and lactic acid are known to have different tastes depending on their types. It is known that mixing two or more substances having different tastes or fragrances together may cause taste and fragrance interactions, such as contrasting effect, where the taste(s) and/or fragrance(s) of one or more substances are emphasized; suppressive effect, where the taste(s) and/or fragrance(s) of one or more substances are suppressed; and synergistic effect, where the taste(s) and/or fragrance(s) of one or more substances are synergistically enhanced. It is also believed that the dissociation state of acetic acid and lactic acid fluctuates depending on the pH of the solution, and that the dissociated protons bind to taste receptors and thereby cause sourness stimuli. It is therefore important to adjust the amounts of lactic acid, acetic acid, and other raw materials added to the beverage taking into consideration various factors such as possible interactions of taste(s) and/or fragrance(s), the dissociation state of the acidic substances, and the pH of the beverage that can affect the sourness stimuli. The acetic acid content can be measured using, e.g., high-performance liquid chromatography.

In order to suppress the off-taste and off-odor specific to dairy when ingested, to mellow the sourness, and to balance the flavor, the mass ratio of the lactic acid content to the acetic acid contained in the beverage of the present invention may preferably be within a predetermined range. The "mass ratio of the lactic acid content to the acetic acid content" herein refers to the value obtained by dividing the content of lactic acid by the content of acetic acid in the beverage of the present invention. Specifically, the mass ratio of the lactic acid content to the acetic acid content in the beverage may preferably be 0.005 or higher, particularly 0.007 or higher, more particularly 0.008 or higher, even more particularly 0.01 or higher, especially 0.02 or higher, and may preferably be 4.00 or lower, particularly 3.70 or lower, more particularly 3.50 or lower, even more particularly 3.30 or lower. If the mass ratio of the lactic acid content to the acetic acid content when ingested is outside the range mentioned above, the off-taste and off-odor specific to dairy may not be well suppressed and the irritation at the throat or "choking" may not be well controlled, whereby the sourness may not be mellowed and the good flavor balance may be lost.

### <Acetic acid content>

The acetic acid content in the beverage of the present invention is not particularly limited. However, from the viewpoint of suppressing the off-taste and off-odor specific to dairy when ingested, mellowing the sourness, and improving the flavor balance, the acetic acid content per 100 mL of the beverage when ingested may preferably be 30 mg or higher, particularly 50 mg or higher, more particularly 70 mg or higher, especially 100 mg or higher. If the acetic acid content falls short of the range mentioned above, the flavor of acetic acid may not be sufficiently perceived, the sourness may not be mellowed, and the off-taste and off-odor specific to dairy may not be well controlled. On the other hand, from the viewpoint of balancing the flavor, the acetic acid content per 100 mL of the beverage when ingested may preferably be 2200 mg or lower, particularly 2000 mg or lower, more particularly 1800 mg or lower, especially 1600 mg or lower. If the acetic acid content exceeds the range mentioned above, the pungent irritation of acetic acid may be noticeable and the irritation at the throat or "choking" may not be well controlled, whereby the sour taste may not be mellowed and the good flavor balance may not be achieved, even if the mass ratio of the free methionine content to the total methionine content and the mass ratio of the lactic acid content to the acetic acid content are adjusted within their respective ranges mentioned above.

### <pH>

The pH of the beverage of the present invention is not limited as long as staying within the acidic range of less than pH 7, and can be determined as appropriate from the viewpoint of balancing the flavor and taste. The pH of the beverage may preferably be, although not particularly limited thereto, 2.0 or higher, particularly 2.2 or higher, even particularly 2.4 or higher, and 4.6 or lower, particularly 4.5 or lower, even particularly 4.4 or lower.

### <Viscosity >

The viscosity of the beverage of the present invention is not particularly limited unless the beverage loses its fluidity, but may preferably be within a predetermined range in terms of having enough fluidity to flow smoothly into the mouth when the container is tilted. Specifically, the viscosity of the beverage at 20°C may preferably be 5,000 mPa·s or lower, particularly 2,000 mPa·s or lower, even particularly 30 mPa·s or lower.

In the present invention, the viscosity of a beverage at 20°C can be measured using methods known to those skilled in the art. An example of such a measurement method includes using various commercially available B-type viscometers (i.e., single cylindrical rotational viscometers, also commonly known as Brookfield rotational viscometers, such as the B-II viscometer manufactured by Toki Sangyo Co., Ltd.). Specifically, approximately 500 ml of a beverage sample adjusted to 20°C is put into a container for use in measurement with a B-type viscometer (e.g., a 500 ml beaker with an outer diameter of 90 mm and a capacity of 500 ml, as specified in JIS R 3503), which is then set in the B-type viscometer. A No. 4 rotor, which can measure the highest viscosity range, is set in the viscometer and immersed to the immersion position, and the rotor is rotated at a speed of 30 rpm until the pointer stabilizes. The rotor is then changed to another rotor suitable for measuring a lower viscosity range followed by the same operations, and this cycle is repeated until the rotor is changed to No. 3, then to No. 2, and finally to No. 1. The pointer value of the rotor that has shown the value closest to the median of the full-scale range of the viscometer scale is determined. Multiplying this pointer value by a conversion multiplier gives the viscosity value.

### <Embodiments of dairy-containing vinegar beverage and other raw materials therefor>

In addition to the essential materials mentioned above, the beverage of the present invention may contain one or more additional components which are ordinarily used for beverages, such as agents for adding flavors (taste and aroma) and agents for adjusting viscosity. Such beverages may also be made into carbonated drinks. Basic materials of the beverage of the present invention generally include water and sugars (including high intensity sweeteners). In addition to these basic materials, the beverage of the present invention may also contain, for example, squeezed liquid of fruit or vegetable (fruit juice or vegetable juice), puree, paste, etc., obtained by cutting or grinding fruit or vegetable, taste and flavor components such as flavors, viscosity regulators such as gums and starches, additives such as salts, stabilizers, colorants, calcium salts, amino acid seasonings, nucleic acid seasonings, organic acid seasonings, acidity enhancers, flavor components, alcoholic beverages, etc. The amounts of these components is not particularly limited, and can be determined according to their applications.

Examples of fruits include those derived from, e.g., apple, peach, grape, acerola, blueberry, pear, orange, lemon, yuzu (Citrus junos), sudachi (Citrus sudachi), lime, mandarin, grapefruit, strawberry, banana, melon, kiwi, pineapple, blackcurrant, apricot, guava, plum, mango, papaya, lychee, etc., although usable fruits are not limited to these examples. These fruits may be used either singly or in any combination of two or more at any ratios.

Examples of vegetables include those derived from, e.g.: fruit vegetables such as tomato, pepper, bell pepper, cucumber, eggplant, and red bell pepper; root vegetables such as onion, ginger, garlic, radish, and carrot; leaf vegetables such as cabbage, lettuce, spinach, napa cabbage, celery, komatsuna (Japanese mustard spinach), Chinese cabbage, molokheiya, kale, shiso (Perilla frutescens), chive, and parsley; stem vegetables such as garlic, asparagus, and bamboo shoot; flower vegetables such as broccoli and cauliflower; and mushrooms, although usable vegetables are not limited to these examples. These vegetables may be used either singly or in any combination of two or more at any ratios. One or more types of squeezed liquid (fruit juice or vegetable juice), puree, paste, etc., obtained from these vegetables and fruits may be used in any combination of two or more at any ratios, and blended into the beverage of the present invention.

Examples of sugars include, e.g., sucrose, maltose, fructose, isomerized liquor sugar, glucose, starch syrup, dextrin, lactose, and galactose; and sugar alcohols such as sorbitol, maltitol, and xylitol. These sugars may be used either singly or in any combination of two or more at any ratios.

Examples of high intensity sweeteners include, e.g., aspartame, acesulfame potassium, sucralose, neotame, licorice extract, and stevia, as well as their enzyme-treated products. These high intensity sweeteners may be used either singly or in any combination of two or more at any ratios.

Examples of flavors include, e.g., fruit flavors such as grape flavors, apple flavors, lemon flavors, orange flavors, grapefruit flavors, yuzu flavors, and sudachi flavors, as well as milk flavors such as yogurt flavors, and other flavors such as ginger flavors. These flavors may be used either singly or in any combination of two or more at any ratios.

Examples of viscosity modifiers include, e.g., xanthan gum, guar gum, gellan gum, gum arabic, tamarind seed gum, tara gum, tragacanth gum, pectin, cellulose, agar, and starch. These viscosity modifiers may be used either singly or in any combination of two or more at any ratios. The content of the viscosity modifier in the beverage is not limited, and can be adjusted as appropriate according to the viscosity, mildness of acidity, and flavor balance.

Examples of organic acid-based seasoning include, e.g., calcium citrate, trisodium citrate, potassium gluconate, sodium gluconate, succinic acid, monosodium succinate, disodium succinate, sodium acetate, DL-potassium hydrogen tartrate, L-potassium hydrogen tartrate, DL-sodium tartrate, L-sodium tartrate, monosodium fumarate, and DL-sodium malate. These organic acid-based seasonings may be used either singly or in any combination of two or more at any ratios.

Examples of alcoholic beverages include, e.g., sake, synthetic sake, mirin (Japanese sweet cooking rice wine), shochu (Japanese distilled spirit), wine, liqueur, and Shaoxing rice wine. These alcoholic beverages may be used either singly or in any combination of two or more at any ratios.

### <Method for producing beverage>

The beverage of the present invention can be produced according to a production method including mixing dairy and vinegar, optionally with one or more other components, in such a manner that the lactic acid content and the mass ratio of the free methionine content to the total methionine content of the resulting mixture are within their respective ranges mentioned above. The mixing of dairy and vinegar, optionally with one or more other components, may preferably be made in such a manner that other properties of the mixture, such as the acetic acid content and the mass ratio of the lactic acid content to the acetic acid content, are also within their respective ranges mentioned above. Mixing may be done either by stirring or by shaking, and optionally with heating if necessary. The mixing and stirring of the components can be done according to known conventional methods. When mixing is performed with heating, the upper limit of the heating temperature may preferably be 100°C or lower, particularly 90°C or lower, more particularly 85°C or lower, so as not to affect the flavor of the beverage.

After made into a uniform liquid state via the process mentioned above, the beverage may be either left as it is or subjected to a sterilization process such as heat sterilization at a temperature of usually within a range of from 60°C to 130°C, and then filled into a container in the same manner as for ordinary beverages. The material and shape of the containers used for the beverage of the present invention are not particularly limited, but include, for example, plastic containers, pouches (polyethylene pouches, aluminum pouches), PET bottles, steel cans, aluminum cans, and bottle containers. After filled into a container, the beverage of the present invention can be subjected to a sterilization process such as heat sterilization or retort sterilization before made into a final beverage product. Such a method of producing the beverage may also be included in aspects of the present invention.

### <Condensed beverage>

The condensed beverage of the present invention is a condensed product of a beverage containing vinegar and dairy, and can yield the beverage of the present invention when diluted by a predetermined dilution factor with water or other flowable solvent. The composition of the condensed beverage is adjusted such that, when diluted with a predetermined solvent by a predetermined dilution factor, it yields the beverage of the present invention that meets the requirements mentioned above. Examples of solvents include water, cow milk, soy milk, fruit juice, vegetable juice, carbonated water, tea (e.g., black tea, green tea, etc.), alcoholic beverage (e.g., beer, sake, whiskeys, liqueurs, spirits, fruit wines, etc.), and the like. If the diluting solvent does not contain any of the components of the beverage of the present invention (e.g., water, etc.), the concentration of each component in the condensed beverage of the present invention can be determined by multiplying the concentration of each component in the beverage of the present invention (to be reconstituted for ingestion) by the reciprocal of the dilution factor. On the other hand, if the diluting solvent contains one or more of the components contained in the beverage of the present invention (e.g., milk, etc.), the concentration of each component in the condensed beverage of the present invention can be adjusted appropriately such that diluting the condensed beverage by a predetermined dilution factor using the solvent produces the beverage of the present invention that meets the predetermined requirements mentioned above. The diluting solvent to be used and the dilution factor should be indicated on the packaging of the condensed beverage of the present invention.

### <Method of improving off-taste and/or off-odor specific to dairy, the throat irritation and/or choking, and/or precipitation and/or coagulation of milk proteins at a low pH>

The method of producing the beverage of the present invention explained above can be utilized for improving off-taste and/or off-odor originating from dairy, throat irritation and/or choking, and/or precipitation and/or coagulation of milk proteins at a low pH. Specifically, the method includes: mixing dairy and vinegar, optionally with any other component(s), so as to adjust the lactic acid content and the mass ratio of the free methionine content to the total methionine content to within their respective predetermined ranges stated above. The mixing of dairy and vinegar, optionally with one or more other components, may preferably be made in such a manner that other properties of the mixture, such as the acetic acid content and the mass ratio of the lactic acid content to the acetic acid content, are also within their respective ranges mentioned above. This method can produce a dairy-containing vinegar beverage which exhibits reduced off-taste and/or off-odor originating from the dairy, reduced throat irritation and/or choking, and/or reduced precipitation and/or coagulation of milk proteins at a low pH. These methods (i.e., methods of improving off-taste and/or off-odor originating from dairy, throat irritation and/or choking, and/or precipitation and/or coagulation of milk proteins at a low pH) may also be included in aspects of the present invention.

### <Summary>

The present invention provides a dairy-containing vinegar beverage which exhibits reduced off-taste and/or off-odor originating from the dairy, reduced throat irritation and/or choking, and/or mellowed sourness, and is excellent in flavor balance. The dairy-containing vinegar beverage of the present invention exhibits reduced off-taste and/or off-odor originating from the dairy, reduced throat irritation and/or choking, and/or mellowed sourness, and is excellent in flavor balance. Thus, the dairy-containing vinegar beverage of the present invention is superior to the conventional dairy-containing vinegar beverage in these properties. In addition, the dairy-containing vinegar beverage of the present invention tends not to cause precipitation and/or coagulation of milk proteins even during long-term storage, and therefore maintains good appearance and exhibits improved texture of the tongue and feel at the throat when ingested.

### EXAMPLES

The present invention will now be described in further detail by way of Examples. These examples are shown merely for convenience of the description, and should not be construed as limitations to the present invention in any sense.

### [Example 1] Analysis of the lactic acid content and the mass ratio of the free methionine content to the total methionine content

### (1) Preparation of test products

Vinegar (15% acetic acid), sugar, and water were mixed according to the amounts shown in Tables 1-1 and 1-2 below, and the resulting mixture was then combined with two types of dairy (Dairy A: milk; Dairy B: fermented milk produced via fermentation with lactic acid bacteria) at different blending ratios, lactic acid, and methionine (L-methionine), and thoroughly stirred and mixed to uniformity at 20°C. The resulting mixture was then sterilized at 120°C for 100 seconds, and filled into a bottle to prepare each of Test Products No. 1 to No. 13 of beverages containing vinegar and milk.

### (2) Evaluation of test products

### [Mass ratio of the free methionine content to the total methionine content]

Test Products No. 1 to No. 13 prepared in (1) above were each subjected to the measurement of the total methionine content and the free methionine content using an automatic amino acid analyzer (L-8500 model from Hitachi, Ltd., and JLC-500/V2 from JEOL). Upon measuring the total methionine content, 2 mL of concentrated hydrochloric acid was added to 2 mL of each test product beverage, which was then hydrolyzed by heating at 110°C for 20 to 24 hours using a block heater before subjected to the measurement. The mass ratio of the free methionine content to the total methionine content for each test product was calculated by dividing the free methionine content measured for the test product by the total methionine content measured for the test product.

### [Mass ratio of the lactic acid content to the acetic acid content]

Test Products No. 1 to No. 13 prepared in (1) above were each subjected to the measurement of the lactic acid content and the acetic acid content using high-performance liquid chromatography (HPLC) under the following conditions, and the measurement results were used for determining the mass ratio of the lactic acid content to the acetic acid content for each test product.

### <HPLC condition >

High performance liquid chromatography (Shimadzu Corporation, model LC-10ADVP) Mobile phase (1): aqueous solution of 4 mM p-toluenesulfonic acid, flow rate 0.9 mL/min Mobile phase (2): 16 m Bis-Tris solution of 4 mM p-toluenesulfonic acid containing 80 µM EDTA, flow rate 0.9 mL/min
Column: Shodex KC810P+KC-811×2 (Showa Denko K.K.)
Column temperature: 50°C

### Detection: Electrical conductivity detector

### [Dairy-derived sugar content]

The two types of dairy used for the preparation of Test Products No. 1 to No. 13 in (1) above (Dairy A: milk; Dairy B: fermented milk made via fermentation with lactic acid bacteria) were each subjected to the measurement of the content of sugars (galactose and lactose) using high-performance liquid chromatography (HPLC) under the following conditions. The content of sugars (galactose and lactose) per 100 mL of each of Test Products No. 1 to No. 13 was determined by multiplying the content of sugars (galactose and lactose) measured for each type of dairy by the concentration of each type of dairy in the test product.

### <HPLC conditions>

High performance liquid chromatography (Shimadzu Corporation, LC-20A) Mobile phase: 88% acetonitrile, flow rate 1.0 mL/min
Column: Shodex HILICpak VG-50 4E (Showa Denko K.K.)
Column temperature: 60°C

### Detection: Shodex RI201H (RI detector)

### [pH]

Test Products No. 1 to No. 13 prepared in (1) above were each subjected to the measurement of the pH value using a pH meter (HORIBA pH meter F-51) at a product temperature of 20°C.

### [Sensory test]

Test Products No. 1 to No. 13 prepared in (1) above were each subjected to the sensory test for evaluating "off-taste and off-odor originating from milk." The sensory test was conducted by 10 experienced panelists, who evaluated each test product on a scale of five intensities: intensity 1 (weak), intensity 2 (slightly weak), intensity 3 (normal), intensity 4 (slightly strong), and intensity 5 (strong). The panelists who conducted the sensory test were familiar with commercially available beverages, and also had a good grasp of the general level of "off-taste and off-odor of milk" (i.e., the "normal" level in the evaluation scale).

### [Evaluation test of precipitation and/or coagulation]

Test Products No. 1 to No. 13 prepared in (1) above were visually checked for the presence or absence of precipitates/coagula originating from milk proteins both immediately after the preparation and after storage at 20°C for 12 months. The evaluation was conducted by 10 experienced panelists, and the results were graded on a scale of 1 (considerable amounts of precipitates/coagula observed), 2 (very small amounts of precipitates/coagula observed), and 3 (no visible amounts of precipitates/coagula observed). The panelists who conducted the evaluation were familiar with commercially available beverages in general circulation, and were skilled enough to understand the general level of precipitates/coagula originating from milk proteins (i.e., "2" in the evaluation scale).

### (3) Evaluation results of test products

The compositions, the total methionine and free methionine contents and their mass ratio, the acetic acid and lactic acid contents and their mass ratio, and the results of sensory test and evaluation of precipitates/coagula for each of Test Products No. 1 to No. 13 are shown in Tables 1-1 and 1-2 below.

**[Table 1-1-1]**

| Test product | | | | No.1 | No.2 | No.3 | No.4 |
|---|---|---|---|---|---|---|---|
| Raw materials | | | | | | | |
| Dairy | Dairy A | | kg | 10 | 10 | 10 | 10 |
| | Dairy B | | kg | | | | |
| Vinegar | Brewed vinegar (15% Acetic acid) | | kg | 10 | 10 | 10 | 10 |
| Organic acid | 100% Lactic acid | | kg | | | 0.5 | 0.5 |
| Sugar | Sucrose | | kg | 100 | 100 | 100 | 100 |
| Water | | | kg | Rest | Rest | Rest | Rest |
| L-Methionine | | | kg | | 0.005 | | 0.004 |
| Total | | | kg | 1000 | 1000 | 1000 | 1000 |
| pH | | | | 3.5 | 3.5 | 3.3 | 3.3 |
| (1) Free methionine | | | mg/100m1 | 0.001 | 0.501 | 0.001 | 0.401 |
| (2) Total methionine | | | mg/100m1 | 0.801 | 1.301 | 0.801 | 1.201 |
| (1)/(2) | | | | 0.001 | 0.385 | 0.001 | 0.334 |
| (3) Lactic acid | | | mg/100ml | 0.0 | 0.0 | 50.0 | 50.0 |
| (4) Acetic acid | | | mg/100ml | 150 | 150 | 150 | 150 |
| (3)/(4) | | | | 0.000 | 0.000 | 0.333 | 0.333 |
| (5) Galactose content | | | mg/100ml | 0.0 | 0.0 | 0.0 | 0.0 |
| (6) Lactose content | | | mg/100ml | 44.0 | 44.0 | 44.0 | 44.0 |
| (5) + (6) | | | mg/100ml | 44.0 | 44.0 | 44.0 | 44.0 |
| Evaluation | | | | | | | |
| Sensory test (average) | | Off-taste and off-odor originating from milk | | 5 | 4.7 | 4.8 | 4.5 |
| Evaluation of precipitates/coagula | | Upon preparation | | 1 | 2 | 1 | 1 |
| | | 12M storage at 20°C | | 1 | 1 | 1 | 1 |

**[Table 1-1-2]**

| Test product | | | | No.5 | No.6 | No.7 |
|---|---|---|---|---|---|---|
| Raw materials | | | | | | |
| Dairy | Dairy A | | kg | 10 | 10 | 10 |
| | Dairy B | | kg | | | |
| Vinegar | Brewed vinegar (15% Acetic acid) | | kg | 10 | 10 | 10 |
| Organic acid | 100% Lactic acid | | kg | 0.5 | 0.5 | 0.5 |
| Sugar | Sucrose | | kg | 100 | 100 | 100 |
| Water | | | kg | Rest | Rest | Rest |
| L-Methionine | | | kg | 0.005 | 0.03 | 0.1 |
| Total | | | kg | 1000 | 1000 | 1000 |
| pH | | | | 3.3 | 3.3 | 3.3 |
| (1) Free methionine | | | mg/100ml | 0.501 | 3.002 | 10.003 |
| (2) Total methionine | | | mg/100m1 | 1.301 | 3.801 | 10.801 |
| (1)/(2) | | | | 0.385 | 0.790 | 0.926 |
| (3) Lactic acid | | | mg/100ml | 50.0 | 50.0 | 50.0 |
| (4) Acetic acid | | | mg/100ml | 150 | 150 | 150 |
| (3)/(4) | | | | 0.333 | 0.333 | 0.333 |
| (5) Galactose content | | | mg/100ml | 0.0 | 0.0 | 0.0 |
| (6) Lactose content | | | mg/100ml | 44.0 | 44.0 | 44.0 |
| (5) + (6) | | | mg/100ml | 44.0 | 44.0 | 44.0 |
| Evaluation | | | | | | |
| Sensory test (average) | | Off-taste and off-odor originating from milk | | 3 | 2.2 | 2 |
| Evaluation of precipitates/coagula | | Upon preparation | | 3 | 3 | 3 |
| | | 12M storage at 20°C | | 2 | 3 | 3 |

**[Table 1-2-1]**

| Test product | | | | No.8 | No.9 | No. 10 |
|---|---|---|---|---|---|---|
| Raw materials | | | | | | |
| Dairy | Dairy A | | kg | 10 | 10 | 100 |
| | Dairy B | | kg | | | |
| Vinegar | Brewed vinegar (15% Acetic acid) | | kg | 10 | 10 | 10 |
| Organic acid | 100% Lactic acid | | kg | 0.02 | 0.1 | 0.5 |
| Sugar | Sucrose | | kg | 100 | 100 | 100 |
| water | | | kg | Rest | Rest | Rest |
| L-Methionine | | | kg | 0.03 | 0.03 | |
| Total | | | kg | 1000 | 1000 | 1000 |
| pH | | | | 3.2 | 3.2 | 3.2 |
| (1) Free methionine | | | mg/100ml | 3.001 | 3.001 | 0.002 |
| (2) Total methionine | | | mg/100ml | 3.801 | 3.801 | 8.001 |
| (1)/(2) | | | | 0.789 | 0.789 | 0.000 |
| (3) Lactic acid | | | mg/100ml | 2.0 | 10.0 | 50.0 |
| (4) Acetic acid | | | mg/100ml | 150 | 150 | 150 |
| (3)/(4) | | | | 0.013 | 0.067 | 0.333 |
| (5) Galactose content | | | mg/100ml | 0.0 | 0.0 | 0.0 |
| (6) Lactose content | | | mg/100ml | 44.0 | 44.0 | 440.0 |
| (5) + (6) | | | mg/100ml | 44.0 | 44.0 | 440.0 |
| Evaluation | | | | | | |
| Sensory test (average) | | Off-taste and off-odor originating from milk | | 3.2 | 2 | 4.8 |
| Evaluation of precipitates/coagula | | Upon preparation | | 3 | 3 | 1 |
| | | 12M storage at 20°C | | 3 | 3 | 1 |

**[Table 1-2-2]**

| Test product | | | | No. 1 | No.12 | No.13 |
|---|---|---|---|---|---|---|
| Raw materials | | | | | | |
| Dairy | Dairy A | | kg | 100 | 5 | 5 |
| | Dairy B | | kg | | 5 | 5 |
| Vinegar | Brewed vinegar (15% Acetic acid) | | kg | 10 | 10 | 10 |
| Organic acid | 100% Lactic acid | | kg | 0.5 | | 1 |
| Sugar | Sucrose | | kg | 100 | 100 | 100 |
| water | | | kg | Rest | Rest | Rest |
| L-Methionine | | | kg | 0.1 | 0.005 | 0.05 |
| Total | | | kg | 1000 | 1000 | 1000 |
| pH | | | | 3.2 | 3.3 | 3.3 |
| (1) Free methionine | | | mg/100ml | 10.000 | 0.501 | 5.001 |
| (2) Total methionine | | | mg/100ml | 18.001 | 1.301 | 5.801 |
| (1)/(2) | | | | 0.556 | 0.385 | 0.862 |
| (3) Lactic acid | | | mg/100ml | 50.0 | 0.5 | 100.5 |
| (4) Acetic acid | | | mg/100ml | 150 | 150 | 150 |
| (3)/(4) | | | | 0.333 | 0.003 | 0.670 |
| (5) Galactose content | | | mg/100ml | 0.0 | 4.3 | 4.3 |
| (6) Lactose content | | | mg/100ml | 440.0 | 35.3 | 35.3 |
| (5) + (6) | | | mg/100ml | 440.0 | 39.6 | 39.6 |
| Evaluation | | | | | | |
| Sensory test (average) | | Off-taste and off-odor originating from milk | | 2.1 | 4.6 | 1.8 |
| Evaluation of precipitates/coagula | | Upon preparation | | 3 | 2 | 3 |
| | | 12M storage at 20°C | | 3 | 2 | 3 |

### [Example 2] Analysis of the acetic acid and lactic acid contents and the mass ratio of the lactic acid content to the acetic acid content

### (1) Preparation of test products

According to the blending amounts shown in Table 2-1 and Table 2-2 below, different ratios of lactic acid and vinegar (15% acetic acid) were combined with a dairy (Dairy B: fermented milk produced via fermentation with lactic acid bacteria), water, methionine (L-methionine), sugar, and water, and mixed at 20°C with stirring thoroughly to make a uniform mixture, which was then sterilized at 120°C for 100 seconds, and filled into bottles, whereby Test Products No. 14 to No. 21 of beverages containing vinegar and milk were prepared.

### (2) Evaluation of test products

### [Mass ratio of the free methionine content to the total methionine content]

Test Products No. 14 to No. 21 prepared in (1) above were each subjected to the measurement of the total methionine content and the free methionine content and the calculation of the mass ratio of the free methionine content to the total methionine content in the same manner as explained in Example 1(2) above.

### [Mass ratio of the lactic acid content to the acetic acid content]

Test Products No. 14 to No. 21 prepared in (1) above were each subjected to the measurement of the lactic acid and acetic acid contents and the calculation of the mass ratio of the lactic acid content to the acetic acid content in the same manner as explained in Example 1(2) above.

### [Dairy-derived sugar content]

Test Products No. 14 to No. 21 prepared in (1) above were each subjected to the measurement of the content of sugars (galactose and lactose) per 100 mL of each beverage test product in the same manner as explained in Example 1(2) above.

### [pH]

Test Products No. 14 to No. 21 prepared in (1) above were each subjected to the measurement of the pH value in the same manner as explained in Example 1(2) above.

### [Sensory evaluation]

Test Products No. 14 to No. 21 prepared in (1) above were each subjected to a sensory test for "off-taste or off-odor originating from milk," "tingling irritation at the throat," "choking," and "mildness of sour taste." The sensory test was conducted by 10 experienced panelists, who evaluated the "off-taste or off-odor originating from milk," "tingling irritation at the throat," "choking" each on a scale of five intensities: intensity 1 (weak), intensity 2 (slightly weak), intensity 3 (normal), intensity 4 (slightly strong), and intensity 5 (strong). The "mildness of sour taste" was evaluated on a scale of three intensities: 1 (lacking mildness of sourness), 2 (mildness of sourness is felt), and 3 (mildness of sourness is felt sufficiently). The panelists who conducted the sensory test were familiar with commercially available beverages and had a good grasp of the general levels of "off-taste or off-odor originating from milk," "tingling irritation at the throat," "choking," and "mildness of sour taste" (i.e., "normal" in each evaluation scale).

### [Evaluation test of precipitation and/or coagulation]

Test Products No. 14 to No. 21 prepared in (1) above were each visually checked for the presence or absence of precipitates/coagula originating from milk proteins both immediately after the preparation and after storage at 20°C for 12 months in the same manner as explained in Example 1(2) above.

### (3) Evaluation results of test products

The compositions, the total methionine and free methionine contents and their mass ratio, the acetic acid and lactic acid contents and their mass ratio, and the results of sensory test and evaluation of precipitates/coagula for each of Test Products No. 14 to No. 21 are shown in Tables 2-1 and 2-2 below.

**[Table 2-1]**

| Test product | | | | No.14 | No.15 | No.16 | No. 17 |
|---|---|---|---|---|---|---|---|
| Raw materials | | | | | | | |
| Dairy | Dairy B | | kg | 20 | 20 | 20 | 20 |
| Vinegar | Brewed vinegar (15% Acetic acid) | | kg | 20 | 30 | 30 | 100 |
| Organic acid | 100% Lactic acid | | kg | | | 0.005 | 0.005 |
| Sugar | Sucrose | | kg | 100 | 100 | 100 | 100 |
| Water | | | kg | Rest | Rest | Rest | Rest |
| L-Methionine | | | kg | 0.05 | 0.05 | 0.05 | 0.05 |
| Total | | | kg | 1000 | 1000 | 1000 | 1000 |
| pH | | | | 3.1 | 3.1 | 3.1 | 2.6 |
| (1) Free methionine | | | mg/100ml | 5.001 | 5.001 | 5.002 | 5.000 |
| (2) Total methionine | | | mg/100ml | 6.603 | 6.604 | 6.604 | 6.614 |
| (1)/(2) | | | | 0.757 | 0.757 | 0.757 | 0.756 |
| (3) Lactic acid | | | mg/100ml | 2.0 | 2.0 | 2.5 | 2.5 |
| (4) Acetic acid | | | mg/100ml | 300 | 450 | 450 | 1500 |
| (3)/(4) | | | | 0.007 | 0.004 | 0.006 | 0.002 |
| (5) Galactose content | | | mg/100ml | 17.2 | 17.2 | 17.2 | 17.2 |
| (6) Lactose content | | | mg/100ml | 53.0 | 53.0 | 53.0 | 53.0 |
| (5) + (6) | | | mg/100ml | 70.2 | 70.2 | 70.2 | 70.2 |
| Evaluation | | | | | | | |
| Sensory test (average) | | Off-taste and off-odor originating from milk | | 2.1 | 2.1 | 2.1 | 2.1 |
| | | Throat irritation | | 3 | 4.2 | 2.5 | 4.8 |
| | | Choking | | 3 | 4.2 | 2.5 | 4.8 |
| | | Mellowness of sour taste | | 3 | 1* | 2 | 1** |
| Evaluation of precipitates/coagula | | Upon preparation | | 3 | 3 | 3 | 3 |
| | | 12M storage at 20°C | | 3 | 3 | 3 | 3 |

| | | | | | | | |
|---|---|---|---|---|---|---|---|
| *: Lacks mellowness **: Causes strong throat irritation and choking | | | | | | | |

**[Table 2-2]**

| Test product | | | | No.18 | No.19 | No.20 | No.21 |
|---|---|---|---|---|---|---|---|
| Raw materials | | | | | | | |
| Dairy | Dairy B | | kg | 20 | 20 | 20 | 20 |
| Vinegar | Brewed vinegar (15% Acetic acid) | | kg | 100 | 100 | 10 | 7 |
| Organic acid | 100% Lactic acid | | kg | 0.1 | 5 | 4.8 | 4.8 |
| Sugar | Sucrose | | kg | 100 | 100 | 100 | 100 |
| Water | | | kg | Rest | Rest | Rest | Rest |
| L-Methionine | | | kg | 0.05 | 0.05 | 0.05 | 0.05 |
| Total | | | kg | 1000 | 1000 | 1000 | 1000 |
| pH | | | | 2.6 | 2.5 | 2.9 | 2.9 |
| (1) Free methionine | | | mg/100ml | 5.002 | 5.000 | 5.000 | 5.000 |
| (2) Total methionine | | | mg/100ml | 6.614 | 6.614 | 6.601 | 6.601 |
| (1)/(2) | | | | 0.756 | 0.756 | 0.757 | 0.757 |
| (3) Lactic acid | | | mg/100ml | 12.0 | 502.0 | 482.0 | 482.0 |
| (4) Acetic acid | | | mg/100ml | 1500 | 1500 | 150 | 105 |
| (3)/(4) | | | | 0.008 | 0.335 | 3.213 | 4.590 |
| (5) Galactose content | | | mg/100ml | 17.2 | 17.2 | 17.2 | 17.2 |
| (6) Lactose content | | | mg/100ml | 53.0 | 53.0 | 53.0 | 53.0 |
| (5) + (6) | | | mg/100ml | 70.2 | 70.2 | 70.2 | 70.2 |
| Evaluation | | | | | | | |
| Sensory test (average) | | Off-taste and off-odor originating from milk | | 2.1 | 2.1 | 2.1 | 2.1 |
| | | Throat irritation | | 2.2 | 2.1 | 2.1 | 2.1 |
| | | Choking | | 2.2 | 2.1 | 2.1 | 2.1 |
| | | Mellowness of sour taste | | 2 | 1*** | 3 | 1*** |
| Evaluation of precipitates/coagula | | Upon preparation | | 3 | 3 | 3 | 3 |
| | | 12M storage at 20°C | | 3 | 3 | 3 | 3 |

| | | | | | | | |
|---|---|---|---|---|---|---|---|
| ***: Has astringency | | | | | | | |

### [Example 3]

### (1) Preparation of test products

According to the amounts shown in Table 3 below, different types and amounts of dairies (Dairy A: milk, Dairy B: fermented milk produced via fermentation with lactic acid bacteria, Dairy C: fermented skimmed milk powder produced via fermentation with lactic acid bacteria) were combined with methionine (DL-methionine), vinegar, fruit juice, sugar, and water, and mixed at 20°C with thoroughly stirring to achieve uniformity at 20°C. The resulting mixture was sterilized at 120°C for 100 seconds, and filled into bottles, whereby Test Products No. 22 to No. 26 of beverages containing vinegar and milk were prepared.

### (2) Evaluation of test products

Test Products No. 22 to No. 26 prepared in (1) above were each subjected to the measurement of the total methionine and free methionine contents and the calculation of their mass ratio, the measurement of the acetic acid and lactic acid contents and the calculation of their mass ratio, the measurement of the content of dairy-derived sugars galactose and lactose) per 100 mL of each beverage test product, and the measurement of the pH value, each in the same manner as explained in Example 1(2) above. Test Products No. 22 to No. 26 were also each subjected to the sensory test in the same manner as explained in Example 2(2), and also to the visual checking of precipitates/coagula in the same manner as explained in Example 1(2) above.

### (3) Evaluation results of test products

The compositions, the total methionine and free methionine contents and their mass ratio, the acetic acid and lactic acid contents and their mass ratio, and the results of sensory test and evaluation of precipitates/coagula for each of Test Products No. 22 to No. 26 are shown in Table 3 below.

**[Table 3]**

| Test product | | | | No.22 | No.23 | No.24 | No.25 | No.26 |
|---|---|---|---|---|---|---|---|---|
| Raw materials | | | | | | | | |
| Dairy | Dairy A | | kg | | | | 10 | |
| | Dairy B | | kg | | 5 | | 15 | 10 |
| | Dairy C | | kg | 3 | 10 | 100 | | 10 |
| Vinegar | Brewed vinegar (15% Acetic acid) | | kg | 15 | | | | |
| | Black vinegar (5% Acetic acid) | | kg | | 30 | 50 | 30 | |
| | Apple vinegar (5% Acetic acid) | | kg | | | | | 30 |
| Organic acid | Citric acid | | kg | 2 | 1.5 | 2.8 | | |
| | Malic acid | | kg | | | | | 2 |
| Sugar | Sucrose | | kg | 10 | 10 | 10 | 10 | 50 |
| | Sucralose | | kg | 0.1 | 0.1 | 0.1 | 0.2 | 0.01 |
| Fruit juice | Apple juice | | kg | 10 | | | | |
| | Grape juice | | kg | | 10 | | 30 | |
| | Grape fruit juice | | kg | | | 10 | | |
| | Blueberry juice | | kg | | | | | 20 |
| Water | | | kg | Rest | Rest | Rest | Rest | Rest |
| L-Methionine | | | kg | | | | 0.1 | 0.05 |
| Total | | | kg | 1000 | 1000 | 1000 | 1000 | 1000 |
| pH | | | | 3.3 | 3.3 | 3.2 | 3.3 | 3.2 |
| (1) Free methionine | | | mg/100ml | 0.204 | 1.042 | 7.404 | 10.362 | 5.681 |
| (2) Total methionine | | | mg/100ml | 0.266 | 1.732 | 9.554 | 12.452 | 6.682 |
| (1)/(2) | | | | 0.767 | 0.602 | 0.775 | 0.832 | 0.850 |
| (3) Lactic acid | | | mg/100ml | 7.9 | 27.7 | 264.4 | 2.4 | 27.3 |
| (4) Acetic acid | | | mg/100ml | 225 | 150 | 250 | 150 | 150 |
| (3)/(4) | | | | 0.035 | 0.185 | 1.058 | 0.016 | 0.182 |
| (5) Galactose content | | | mg/100ml | 2.9 | 13.8 | 95.0 | 12.9 | 18.1 |
| (6) Lactose content | | | mg/100ml | 4.6 | 28.7 | 154.0 | 83.8 | 41.9 |
| (5) + (6) | | | mg/100ml | 7.5 | 42.5 | 249.0 | 96.7 | 60.0 |
| Evaluation | | | | | | | | |
| Sensory test (average) | | Off-taste and off-odor originating from milk | | 2 | 2 | 2 | 2 | 1.8 |
| | | Throat irritation | | 1.5 | 2 | 2 | 2.2 | 1.5 |
| | | Choking | | 1.5 | 2 | 2.1 | 2.3 | 2 |
| | | Mellowness of sour taste | | 3 | 3 | 3 | 3 | 3 |
| Evaluation of precipitates/coagula | | Upon preparation | | 3 | 3 | 3 | 3 | 3 |
| | | 12M storage at 20°C | | 3 | 3 | 3 | 3 | 3 |

### INDUSTRIAL APPLICABILITY

The present invention has a wide range of applicability to various beverages containing milk and vinegar, and therefore has very high utility.

## Claims

1. A beverage comprising vinegar and dairy and having:
(A) a lactic acid content of within a range of from 1 mg to 500 mg per 100 mL of the beverage; and
(B) a mass ratio of a free methionine content to a total methionine content of 0.34 or higher.

2. The beverage as defined in claim 1, further having:
(C) a mass ratio of a lactic acid content to an acetic acid content of within a range of from 0.005 to 4.00.

3. The beverage as defined in claim 1 or 2, further having:
(D) an acetic acid content of 30 mg or higher per 100 mL of the beverage.

4. The beverage as defined in any one of claims 1 to 3, further having:
(E) a dairy-derived sugar content of 3000 mg or lower per 100 mL of the beverage.

5. The beverage as defined in any one of claims 1 to 4, further having:
(F) a pH of within a range of from 2.0 to 4.6.

6. A condensed beverage comprising vinegar and dairy and having a composition adjusted so as to yield a beverage as defined in any one of claims 1 to 5 via dilution by a predetermined dilution factor.

7. A method for producing a beverage containing vinegar and dairy, comprising:
mixing dairy and vinegar optionally with one or more other components so as to yield a mixture having:
(A) a lactic acid content of within a range of from 1 mg to 500 mg per 100 mL of the beverage; and
(B) a mass ratio of a free methionine content to a total methionine content of 0.34 or higher.

8. A method for improving a flavor of a beverage containing vinegar and dairy, comprising:
mixing dairy and vinegar optionally with one or more other components so as to yield a mixture having:
(A) a lactic acid content of within a range of from 1 mg to 500 mg per 100 mL of the beverage; and
(B) a mass ratio of a free methionine content to a total methionine content of 0.34 or higher.

9. A method for improving a beverage containing vinegar and dairy in at least one of: off-taste and/or off-odor specific to dairy, irritation at the throat and/or choking, and precipitation and/or coagulation of milk proteins at a low pH, said method comprising:
mixing dairy and vinegar optionally with one or more other components so as to yield a mixture having:
(A) a lactic acid content of within a range of from 1 mg to 500 mg per 100 mL of the beverage; and
(B) a mass ratio of a free methionine content to a total methionine content of 0.34 or higher.
